(19) Europäisches Patentamt
European Patent Office
Office européen des brevets

(11) **EP 1 906 010 A1**

(12) **EUROPÄISCHE PATENTANMELDUNG**

(43) Veröffentlichungstag:
**02.04.2008 Patentblatt 2008/14**

(51) Int Cl.:
*F03D 1/00* *(2006.01)*     *F03D 7/02* *(2006.01)*
*F03D 7/00* *(2006.01)*     *F03D 7/04* *(2006.01)*

(21) Anmeldenummer: **06020302.3**

(22) Anmeldetag: **27.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Hahn, Wolfgang**
**37692 Eschwege (DE)**

(72) Erfinder: **Hahn, Wolfgang**
**37692 Eschwege (DE)**

(54) **Windkraftanlage mit robuster, mechanish arbeitender, wartungsfreier Überdrehzahl-und Sturmsicherung**

(57) Die vorliegende Erfindung betrifft eine Windkraftanlage mit einer einen Rotor (10) und eine Heckfahne (19) tragenden Gondel, die bei Sturm zur Seite wegklappt. Um diese hinsichtlich Schutz gegen Überdrehzahl bei Wegfall der elektrischen Last zu verbessern, wird eine Windkraftanlage vorgeschlagen, wobei

a) eine Verbindungswelle (16) in einer am Mast der Windkraftanlage befindlichen Lagerbuchse (21) schwenkbar in einem vorgegebenem Winkelbereich zwischen zwei durch Anschläge definierten Endstellungen gelagert ist,
b) wobei die Verbindungswelle (16) einen Generatoraufbau (14) aus Rotorwelle, Generatorbefestigung und Generatorgehäuse und die Heckfahne (18) jeweils starr befestigt tragend verbindet,
c) wobei die Heckfahne (18) so geformt ist, dass sie, wenn sie vom Wind in der Betriebsstellung angeströmt wird, ein Gegendrehmoment um die Achse der Verbindungswelle (16) erzeugt, das entgegengesetzt zu dem Betriebsdrehmoment des Rotors (10) gerichtet ist, und eine Schwenkbewegung der Verbindungswelle einleiten kann,
d) wobei der Generatoraufbau einschließlich Rotor (10) in der verschwenkten Stellung eine Form besitzt, die ein mittels Windkräfte erzeugtes Drehmoment bewirkt, das den Rotor in die Sturmstellung bringt.

Fig. 1

**Beschreibung**

STAND DER TECHNIK

Die vorliegende Erfindung betrifft Windkraftanlagen und insbesondere eine Windkraftanlage nach dem Oberbegriff des Anspruchs 1.

Windkraftanlagen nach dem Stand der Technik besitzen eine Gondel, die drehbar um die vertikale Mastrichtung (z-Achse) der Windkraftanlage gelagert ist. Dabei trägt die Gondel den Rotor der Windkraftanlage und zum Beispiel eine sogenannte Heckfahne, die der Nachführung des Rotors bei wechselnden Windrichtungen dient. Weiter ist eine sogenannte "Sturmsicherung" vorgesehen.

Bei einer häufigen, rein mechanisch arbeitenden Sturmsicherung ist die Rotorachse seitlich versetzt zur Gondelachse gebaut, so dass der Winddruck auf den Rotor ein Drehmoment erzeugt, das den Rotor aus dem Wind zu drehen bestrebt ist. So kann der Übergang von einer Betriebsstellung mit Rotorachse parallel zur Windrichtung in eine Sturmstellung mit Rotorachse mehr oder weniger senkrecht zur Windrichtung vollzogen werden. Dieses Drehmoment wird im normalen Betriebsfall der Betriebsstellung durch die Heckfahne kompensiert, die mit einer Feder gegen einen Anschlag gelagert ist. Diese Feder wird beispielsweise auf Zug beansprucht und entwickelt eine Kraft, die den Rotor wieder zurückzudrehen bestrebt ist, so dass die Rotorachse möglichst parallel zur Windrichtung ausgerichtet ist.

Solche Windkraftanlagen haben den Nachteil, dass die Rotordrehzahl bei Wegfall der elektrischen Last - im Leerlauf - relativ zu der vorher bei Last vorhandenen Drehzahl erheblich ansteigt. Der Rotor kann in so einem Fall insbesondere bei Hagel aufgrund der empfindlichen Blattvorderkanten erheblich beschädigt oder sogar ganz zerstört werden, auch wegen der hohen Fliehkräfte. Außerdem tritt eine erhebliche Geräuschemission auf.

Es sollte also eine separate Schutzvorrichtung vorhanden sein, die den Rotor vor Überdrehzahlen bewahrt.

Die elektrische Last fällt zum Beispiel weg, wenn das Netz ausfällt oder wenn eine wichtige Kabelverbindung auf der elektrischen Seite der Windkraftanlage unterbrochen wird.

Zum einen bietet der Stand der Technik die Möglichkeit, die Rotorblätter zu verstellen, damit sie weniger Kraft aufnehmen und die Rotordrehzahl trotz weggefallener Last begrenzt bleibt. Eine solche Blattverstellung funktioniert mechanisch und hat den Nachteil, dass sie anfällig ist, weil sie prinzipiell relativ selten genutzt wird, und wenn sie dann einmal genutzt wird, immer das Risiko besteht, dass der mechanische Teil durch Korrosion schwergängig oder überhaupt nicht gängig ist. Daher muss eine solche Blattverstellungseinrichtung regelmäßig gewartet werden, was wiederum aus Kostensicht nachteilig ist.

Eine andere Möglichkeit einer Schutzvorrichtung gegen Leerlaufüberdrehzahl, die im Stand der Technik bekannt ist, sind Bremsen, die an der Rotorachse ansetzend den Rotor zu gegebener Zeit bremsen. Die Bremse wird im Stand der Technik eingeschaltet, wenn ein Sensor eine Überdrehzahl misst. Diese Art der Überdrehzahlsicherung hat den Nachteil, dass teure mechanische Bremsenteile an der Windkraftanlage montiert und gewartet werden müssen, damit die Bremse im Bedarfsfall immer einsatzbereit ist. Des weiteren muss auch der Sensorschaltkreis installiert und gewartet werden, damit das elektrische Signal, welches vom Sensor kommt, zuverlässig zur Aktivierung der Bremse führt. Gleichzeitig muss auch die Deaktivierung der Bremse verlässlich realisiert werden. Dafür ist es bei bestimmten Anlagen notwendig, dass Personal zur Windkraftanlage fährt und die Bremse wieder löst.

Bei anderen, zumeist groß ausgelegten Windkraftanlagen ist ein zusätzliches Anemometer eingebunden, welches die Windgeschwindigkeit kontinuierlich misst. Mit der Information über die Windgeschwindigkeit wird eine Bremse und deren Betrieb dann automatisch geregelt. Ein solcher Regelkreis mit Anemometer und Bremse stellt eine Fehlerquelle dar, muss gewartet werden, erzeugt daher relativ hohe, nicht kalkulierbare Kosten, und sollte daher vermieden werden.

Es ist daher Aufgabe der vorliegenden Erfindung, eine sogenannte side-facing Windkraftanlage, die bei Sturm zur Seite wegklappt, hinsichtlich Schutz gegen Überdrehzahl bei Wegfall der elektrischen Last zu verbessern. Es ist eine besondere Aufgabe der vorliegenden Erfindung, eine solche side-facing Windkraftanlage mit einer Schutzvorrichtung gegen Erreichen einer Überdrehzahl bei Wegfall der elektrischen Last auszurüsten, die rein mechanisch arbeitet und ohne weitere Sensorik sowie ohne Blattverstellungsmechanismus auskommt.

VORTEILE DER ERFINDUNG

Der Gegenstand mit den Merkmalen des Anspruchs 1 löst diese Aufgaben.

In den Unteransprüchen finden sich vorteilhafte Weiterbildungen und Verbesserungen des jeweiligen Gegenstandes der Erfindung.

Kurz zusammengefasst ist erfindungsgemäß ein schwenkbar gelagerter Träger vorgesehen, der entlang seiner Längsausdehnung einerseits eine Baueinheit aus Generatoraufbau und Rotor, und andererseits eine besonders geartete Heckfahne starr trägt. Dieser Träger ist mittels eines Schwenklagers schwenkbar um seine Längsachse innerhalb eines Winkelbereichs von etwa 90° zwischen zwei Anschlägen gelagert. Der erste Anschlag wird in der Betriebsstellung benutzt, der zweite Anschlag wird in der Sturmstellung benutzt. Die Anschläge sind bevorzugt an dem Lagergehäuse des Schwenklagers vorgesehen.

In der Betriebsstellung ist die Längsachse des Trägers wie aus dem Stand der Technik bekannt, etwa parallel zur Windrichtung orientiert. Da der Träger den Generatoraufbau einschließlich Rotor mit der Heckfahne starr verbindet, und bevorzugt nicht nur linear gestreckt ausgebildet ist, sondern nach typischer Art einer Welle auch radial verlaufende Bereiche aufweist und dabei schwenkbar gelagert ist, wird der Träger hierin als "Verbindungswelle" bezeichnet. Ein erster radial verlaufender Teil der Verbindungswelle ist so dimensioniert, dass ein Versatz $z_1$ gebildet wird, wobei der Massenschwerpunkt des "Luvgebildes" aus "Rotor, Rotorwelle, Generatoraufbau, generatorseitiger Teil der Verbindungswelle" in der Betriebsstellung um eine dem Versatz entsprechende Strecke oberhalb des Schwenklagers liegt.

Die Heckfahne ist nicht wie im Stand der Technik als flaches Blatt ausgebildet, sondern so geformt, dass sie, wenn sie vom Wind in der Betriebsstellung angeströmt wird, ein "Gegendrehmoment" um die Wellenachse erzeugt, das entgegengesetzt zu dem so genannten "Betriebsdrehmoment" gerichtet ist, das der innerhalb des Generators befindliche Rotor auf den im Generator befindlichen Stator aufgrund der elektromagnetischen Kopplung während des Betriebs ausübt.

Eine besonders geeignete Form ist ein zweiteiliger Aufbau der Heckfahne mit einem in der Betriebsstellung "oberhalb" der Verbindungswelle liegenden, flächigen Teil und einem unterhalb liegenden, flächigen Teil, wobei beide Teile in der Betriebsstellung jeweils einen gewissen Anstellwinkel zur Windrichtung haben, wodurch eine Art Heckfahnenrotor mit zwei Rotorblättern gebildet und das gewünschte Drehmoment erzeugt wird. Auch ein einteiliger Aufbau ist prinzipiell möglich. Diese flächigen Fahnenteile können auch eine gewisse, flügelartige Profilierung besitzen, die eine Querkraft erzeugt, die ursächlich ist für das gewünschte Gegendrehmoment.

Die Heckfahne hat damit eine Doppelfunktion: Zum einen wirkt sie aufgrund des relativ flachen Anstellwinkels immer noch wie eine klassische Heckfahne und führt den Rotor der Anlage nach bei wechselnden Windrichtungen; zum anderen erzeugt sie das erwähnte Gegendrehmoment, das bei Existenz des Betriebsdrehmoments von diesem kompensiert wird und sich nicht weiter auswirkt, das jedoch erfindungsgemäß bei Wegfall der elektrischen Last und infolgedessen bei Wegfall des Betriebsdrehmoments nicht mehr kompensiert wird und ursächlich ist für eine erfindungsgemäße Verschwenkung der Verbindungswelle um deren Achse. Dreht der Rotor in Windrichtung gesehen im Uhrzeigersinn, so ist diese Schwenkbewegung gegen den Uhrzeigersinn gerichtet. Sobald diese Verschwenkung einsetzt, verschiebt sich der Druckpunkt des Windes auf den Rotor von seiner Stellung genau über dem Gondellager an der Mastspitze der Windkraftanlage aufgrund des oben erwähnten Versatzes $z_1$ seitlich weg, so dass aufgrund des Winddrucks ein Drehmoment um die Mastachse (z-Achse) aufgebaut wird, das bestrebt ist, den Gondelaufbau noch weiter aus dem Wind zu drehen.

Ein Gegengewicht an dem in der Betriebstellung unteren Teil der Heckfahne ist so positioniert und dimensioniert, dass es das Drehmoment des oben erwähnten "Luvgebildes" bei geringen bis mittleren Windstärken etwas überkompensiert, so dass das Drehmoment des "Luvgebildes" etwas kleiner ist als dass des durch die Heckfahne gebildeten "Leegebildes".

Das resultierende Drehmoment M4 hält die Windkraftanlage bei Flaute in Betriebsstellung bis hin zu Windgeschwindigkeiten, die zum Anlauf der Anlage nötig sind.

Die Betriebsstellung zeichnet sich damit dadurch aus, dass sie quasi eine indifferente Gleichgewichtsstellung darstellt, die tendenzweise übergehen kann in eine so genannte Vorbereitungsstellung, die ihrerseits die Voraussetzung dafür schafft, dass der Wind an der Gondel so angreifen kann, dass sich der Rotor aus dem Wind in die Sturmstellung dreht (side-facing).

Die Verbindungswelle und die Gondel mit Rotor inklusive Heckfahne sind erfindungsgemäß so geformt, dass auch bei Leerlauf des Rotors - wie zum Beispiel bei Wegfall der elektrischen Last - und vorhandenem Wind das Drehmoment M3 der Heckfahne um die x-Achse die Gondel in Richtung der Vorbereitungsstellung bewegt, und dann, nachdem diese zumindest tendenzweise angenommen wurde, ein Drehmoment um die z-Achse (Mastachse) erzeugt wird, das den Rotor aus dem Wind in die dem Stand der Technik bekannte Sturmstellung dreht, in der die Rotorebene weitgehend parallel zur Windrichtung ist.

Eine solche z-Drehung ist aus dem Stand der Technik bislang nur bei Erreichen eines maximalen Winddrucks bekannt, nicht jedoch bei Wegfall der elektrischen Last.

Dadurch, dass erfindungsgemäß die Verbindung zwischen Rotor und Generator auf der einen Seite und der Heckfahne auf der anderen Seite eine Schwenkung um ca. 90° zulässt und gleichzeitig die Verbindungswelle auf ihrer, der Heckfahne zugewandten Seite einen Versatz - bezeichnet als $z_2$ in Figur 3 - aufweist, wird, sobald die Schwenkung um 90° oder weniger erreicht ist, ein entsprechendes, um die z-Achse wirkendes Drehmoment allein durch Angriffskräfte des Windes an Fahne bzw. Rotor und Generator erzeugt, das dazu bestrebt ist, den Rotor aus dem Wind zu drehen, weil die Angriffskräfte auf die Fahne entsprechend groß sind (Figur 4), um diese Drehung zu vollziehen (siehe auch Figur 5 und Figur 6).

Die Erfindung ist zum Einen durch die Verwendung des Betriebsdrehmomentes M1 als mechanisch wirkende Steuergröße zum automatischen Steuern der verschiedenen Stellungen der Gondel charakterisiert und zum Anderen durch die zusätzliche Ausformung der Heckfahne zu einem um ca. 90° schwenkbaren Zweiblattrotor mit dem Moment M3. Die klassische Aufgabe der Heckfahne, die Windrichtungsnachführung um die Z-Achse, bleibt hier erhalten.

Die erfindungsgemäße Windkraftanlage ist daher mit einer rein mechanisch, automatisch und stromlos arbeitenden Überdrehzahlsicherung sowohl bei Sturm als auch bei Lastwegfall ausgestattet. Das System ist robust auslegbar und wartungsarm und aufgrund der einfachen Konstruktion sehr preisgünstig herstellbar. Es ist prinzipiell für Windkraftanlagen jeder Größe herstellbar und eignet sich insbesondere für kleinere Anlagen, die kostenoptimiert betrieben werden sollen.

Wenn die Heckfahne aus zwei starr mit der Verbindungswelle verbundenen Teilen besteht, die jeweils in einem starr vorgegebenen Anstellwinkel zur x-z-Ebene angeordnet sind, dann besteht der Vorteil, dass das von dieser Heckfahne erzeugte Moment um die z-Achse prinzipiell so ist, wie im Stand der Technik für Heckfahnen bekannt. Das heißt, dass um die z-Achse nachführende Drehmoment ist im wesentlichen gleich Null, wenn die Verbindungswelle parallel zur Windrichtung ausgerichtet ist.

Bei einer zweiteiligen Heckfahne sind die jeweiligen Anstellwinkel in bevorzugter Weise symmetrisch zur x-z-Ebene, der eine positiv, der andere negativ. Je nach Auslegung der Windkraftanlage können verschiedene Anstellwinkel im Zusammenhang mit den zu dimensionierenden Flächen der beiden Heckfahnenteile angemessen sein. Ein Richtwert liegt im Bereich zwischen 10° und 40°, und bevorzugt zwischen 20 und 35°, am meisten bevorzugt für ebene Flächen 30°, da eine ebene Platte bei einem Anstellwinkel von ca. 30° zur Anströmrichtung den maximalen Auftriebsbeiwert erzeugt.

Wenn die Rotorwelle in der Betriebsstellung fluchtend mit dem Mast angeordnet ist und gleichzeitig die Rotorwelle in der genannten Vorbereitungsstellung zwischen Betriebsstellung und Sturmstellung nicht fluchtend mit dem Mast angeordnet ist, dann ergibt sich der Vorteil, dass auf konstruktiv einfache Weise ein Drehmoment um die z-Achse erzeugbar ist, das wirksam ist, um den Rotor in die Sturmstellung zu bringen.

In vorteilhafter Weise ist die Gewichtsverteilung von Generatoraufbau, Rotor und Heckfahne derart, dass sie ein Drehmoment erzeugt, das den Rotor bei Flaute bis hinauf auf etwa 4 m pro Sekunde Windgeschwindigkeit in der Betriebsstellung hält, vergleiche auch oben.

ZEICHNUNGEN

Ausführungsbeispiele der Erfindung sind in den Zeichnungen schematisch dargestellt und in der nachfolgenden Beschreibung näher erläutert.

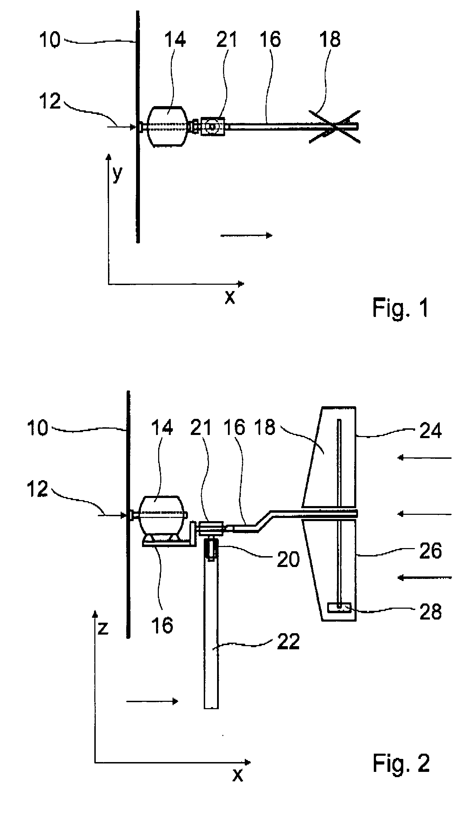

Figur 1 zeigt schematisch den Gondelaufbau aus Rotor, Generator, Verbindungswelle und Heckfahnenflügel in Draufsicht (von oben) in der normalen Betriebsstellung, wobei die Windrichtung von links nach rechts in x-Richtung zeigt;

Figur 2 zeigt dieselbe Anordnung wie in Figur 1, nur als Seitenansicht in Y-Richtung;

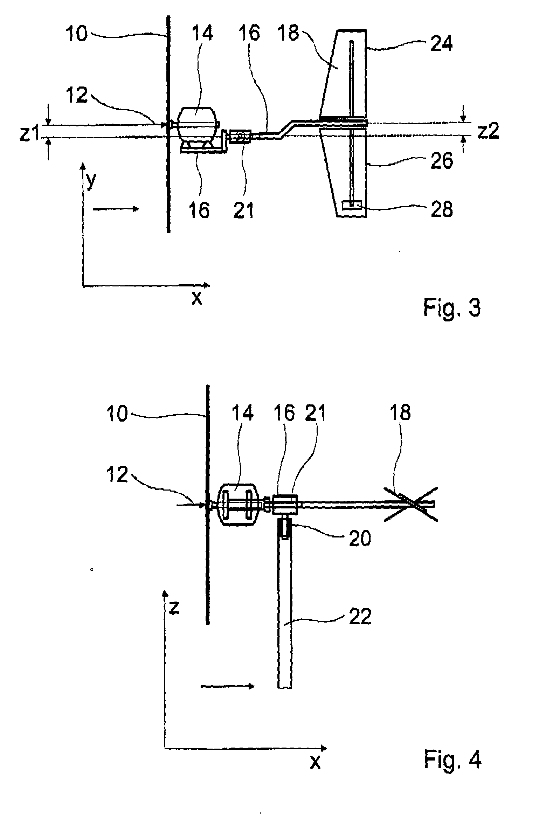

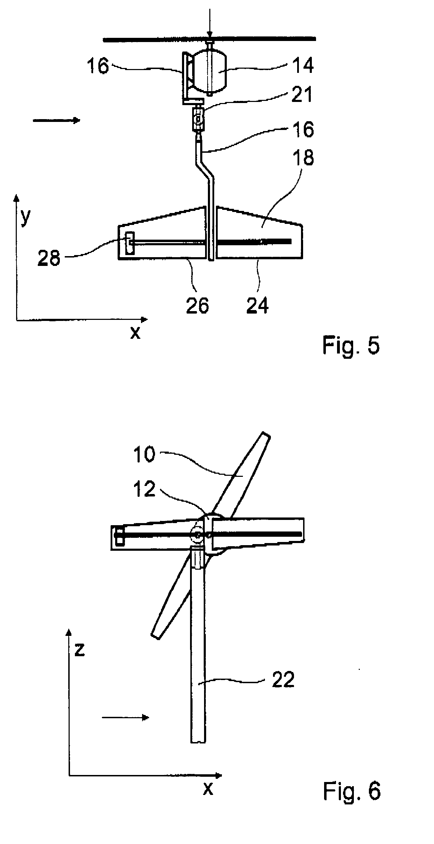

Figur 3 zeigt eine Draufsicht von oben, wobei sich die erfindungsgemäße Vorrichtung in einer sogenannten "Vorbereitungsstellung" befindet, die als idealisierte Zwischenstellung zwischen der Betriebsstellung aus den Figuren 1 und 2 und einer Sturmstellung aus den Figuren 5 und 6 darstellt.

Figur 4 zeigt eine Seitenansicht der Vorrichtung ebenfalls in der Vorbereitungsstellung von Figur 3;

Figur 5 zeigt eine Draufsicht auf die erfindungsgemäße Vorrichtung von oben in der Sturmstellung oder Schutzstellung bei Wegfall der elektrischen Last befindlich;

Figur 6 zeigt eine Seitenansicht auf die in Figur 5 gezeigte Vorrichtung;

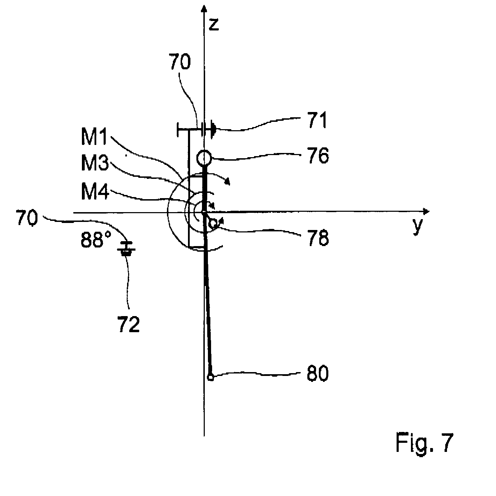

Figur 7 zeigt eine schematische, reduzierte Darstellung der Schwerpunkte und der angreifenden Momente, idealisiert in Windrichtung betrachtet, von vorn auf die Luv-Seite der Windkraftanlage,

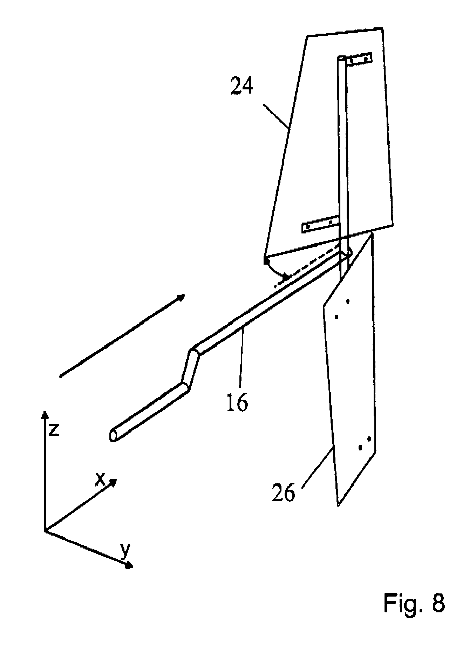

Figur 8 zeigt eine Ansicht der Heckfahne etwa in Windrichtung gesehen,

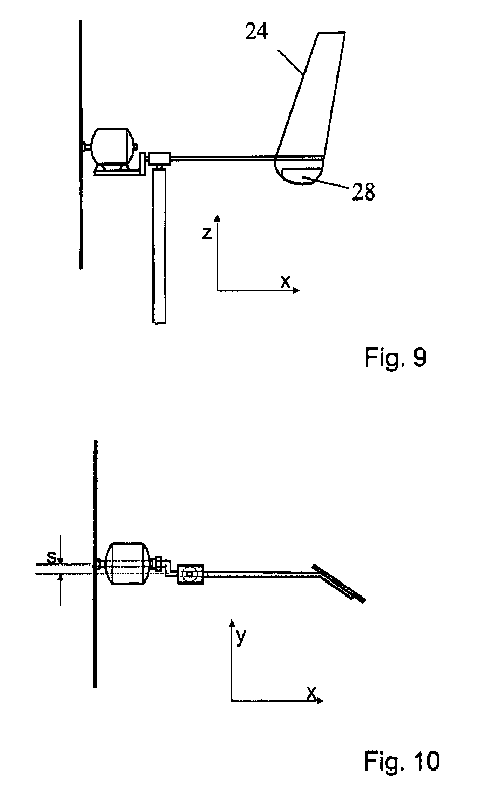

Figur 9 zeigt ein variiertes, weiteres Ausführungsbeispiel mit nur einem Fahnenflügel in der Seitenansicht in der Betriebsstellung, und

Figur 10 zeigt diese Variation in der Betriebsstellung und in der Draufsicht.

BESCHREIBUNG DER AUSFÜHRUNGSBEISPIELE

In den Figuren bezeichnen gleiche Bezugszeichen gleiche oder funktionsgleiche Komponenten.

Die Windkraftanlage gemäß bevorzugtem Ausführungsbeispiel enthält einen Gondelaufbau, wie er schematisch in den Figuren 1 bis 6 dargestellt ist. Dabei ist der Rotor 10 auf einer Rotorwelle 12 sitzend mit dem Generator 14 verbunden. Der Generator sitzt in einem Gehäuse, das mit geeigneten Befestigungsmitteln auf dem kurzen Arm einer Verbindungswelle 16 befestigt ist. Die Verbindungswelle 16 verbindet weiter über ihren langen Arm mit dem erfindungsgemäß vorgesehenen Heckfahnenflügel 18. Die Verbindungswelle 16 ist in einer in x-Richtung laufenden Lagerbuchse gelagert, die hier "x-Buchse" oder Schwenklager 21 genannt wird, das mit einem Ansatzstück verbunden ist, das seinerseits mit dem Gondellager 20 verbunden ist. Das Gondellager 20 ist aus dem Stand der Technik bekannt und bewirkt, dass sich der gesamte Gondelaufbau um die Mastachse (z-Achse) drehen kann, zwecks Nachführung bei wechselnder Windrichtung. Mit näherem Bezug zu Figur 2 ist die Verbindungswelle 16 auf ihrem rotorseitigen, kurzen Arm so geformt, dass die Rotorwelle versetzt zur x-Buchse 21 verläuft. Dieser Versatz in z-Richtung muss wohl dimensioniert sein, wie aus der weiteren Beschreibung noch ersichtlich werden wird. Der heckfahnenseitige lange Arm der Verbindungswelle hat ebenfalls einen Versatz in z-Richtung, der einen längeren Teil des langen Arms ein Stück h in z-Richtung gegenüber der x-Buchse 21 nach oben versetzt. Auch dieser Versatz muss wohl dimensioniert sein, wie später noch beschrieben werden wird.

Die Heckfahne der Windkraftanlage ist in diesem bevorzugten Ausführungsbeispiel aus zwei flachen, ebenen Metallplatten aufgebaut, dem oberen Flügelblatt 24 und dem unteren Flügelblatt 26, vgl. Figur 2 und Figur 8, die die Heckfahne in Windrichtung gesehen in ihrer Betriebsstellung zeigt. Beide Flügelblätter bilden in der Betriebsstellung einen starren Anstellwinkel von etwa 30 Grad, also +30 Grad bzw. -30 Grad in Relation zur etwa in Strömungsrichtung zeigenden x-z-Ebene, siehe auch Figur 1, wobei das obere Flügelblatt auf der in Windrichtung gesehen nach rechts schauenden Seite angeströmt wird und das untere auf der nach links schauenden Oberfläche angeströmt wird. Solchermaßen wird eine Art 2-Blatt-Rotor gebildet, der bei Anströmung durch Wind bestrebt ist, sich entgegengesetzt zum eigentlichen Rotor zu drehen.

Die beiden Blätter der Heckfahne sind an der Verbindungswelle 16 durch eine starre Befestigung, beispielsweise bei Verwendung von Metall durch Verschweißen befestigt. Dreht sich die Verbindungswelle um die x-Achse in ihrem vorgegebenen Schwenkbereich von etwa 90°, dann drehen sich die beiden Heckfahnenflügelblätter 24 und 26 mit. Die erfindungsgemäße Heckfahne erzeugt also zusätzlich zu dem im Stand der Technik bekannten Drehmoment um die z-Achse ein Drehmoment um die x-Achse (Achse der Verbindungswelle). Sie wirkt daher diesbezüglich ähnlich wie ein Zweiblattrotor zwischen zwei Anschlägen.

Wie Figur 1 als Draufsicht auf die Betriebsstellung zeigt, liegen die Rotorwelle und die Verbindungswelle sowie der Mast der Windkraftanlage in der x-z-Ebene.

Die Figuren 3 bis 6 zeigen dann die weiteren Ansichten in der Vorbereitungsstellung bzw. in der Sturmstellung.

Mit weiterem Bezug zu Figur 7 werden im folgenden die Schwerpunkte der bei der Erfindung relevanten Flächen und die entsprechenden Drehmomente erläutert. Dabei sind in Figur 7 nur die Flächenschwerpunkte der Windangriffsflächen anstelle der gesamten Flächen gezeigt, um die Klarheit der Darstellungen zu erhöhen. Figur 7 zeigt diese Schwerpunkte als Ansicht, in Windrichtung.

Der Schwerpunkt 76 von Generator und Rotor liegt in z-Richtung gesehen oberhalb der x-Buchse 21, die die Verbindungswelle schwenkbar lagert. Der Schwerpunkt 80 von Heckfahne und Ausgleichsgewicht liegt in der Betriebsstellung deutlich unterhalb dieser Buchse 21 und etwas rechts versetzt zur Mastachse. Weiter ist eine Anschlagnase 70 mit der Verbindungswelle 16 verschweißt, die einerseits am Stahlgehäuse des Schwenklager 21 an einem daran verschweißten Anschlag 71 für die Betriebsstellung 0° anschlägt, und andererseits an eienm anderen Anschlag 72 des Stahlgehäuses für die Sturmstellung bei etwa 88° anschlägt.

Des weiteren ist der Schwerpunkt von Generator, Rotor, Heckfahne, Ausgleichsgewicht, Verbindungswelle und sonstigen Aufbauten und Verkleidungen als Punkt 78 eingezeichnet. Er liegt etwas rechts und relativ dicht unterhalb des Schwenklagers der Verbindungswelle.

Die einzelnen Drehmomente, die ebenfalls in Figur 7 eingezeichnet sind, sind im folgenden kurz mathematisch skizziert.

<u>M1</u>

Das Betriebsdrehmoment M1 ist bevorzugt als Funktion der Winkelgeschwindigkeit und der Wellenleistung angegeben. Es steigt mit zunehmender Windgeschwindigkeit etwa mit der 2. Potenz der Windgeschwindigkeit, bis Stallbetrieb erreicht ist, ab dem es in etwa konstant bleibt. Wenn sich der Rotor langsam einer Drehbewegung um die z-Achse folgend aus dem Wind herausdreht, nimmt die Drehzahl ab.

Die Wellenleistung $P_{rot}$ einer Windkraftanlage berechnet sich wie folgt:

$$P_{rot} = c_{pw} \cdot 0,5 \cdot \rho \cdot F \cdot v^3$$

und $M_1$ ist

$$M_1 = P_{rot} \cdot \omega^{-1} \, .$$

Für optimale Leistungsausbeute der Windkraftanlage gilt
ω proportional ν,
mit:

$c_{pw}$ = Leistungsbeiwert des Windrades
$F$ = Rotorkreisfläche
ν = Windgeschwindigkeit
ρ = Dichte der Luft
ω = Winkelgeschwindigkeit

M3

Das Moment M3 ist auf beide Heckfahnenflügel bezogen und errechnet sich aus der Windkraft auf die beiden Heckfahnenflügel und den Hebelarmen S1 am jeweiligen Druckpunkt. Die Windkraft und damit das Drehmoment M3 wächst quadratisch mit der Windgeschwindigkeit $v_3$.

Die Heckfahne befindet sich in dem Bereich der abgebremsten Strömung. Ein Windrotor entzieht dem Wind die maximale Energie, wenn $v_3$ etwa ein Drittel von v beträgt. v ist die ungestörte Windgeschwindigkeit weit vor dem Windrad. Im Stallbetrieb werden diese Verhältnisse zugunsten von $v_3$ verändert. Im Stallbetrieb wird der Wind weit weniger abgebremst.

Insbesondere durch den Anstellwinkel und die Größe der Heckfahnenflügel wird das Moment M3 in Abhängigkeit von $v_3$ bestimmt.

Die zum Schwenkmoment genutzte "Auftriebskraft" $K_4$ des Heckfahnenflügels ist ($M_3$ bezieht sich auf zwei Flügel)

$$K_a = c_a \cdot 0,5 \cdot \rho \cdot A \cdot v_3^2 \, .$$

$$M_3 = K_a \cdot s_1 \cdot 2$$

mit: $c_a$ = Auftriebsbeiwert

$A$ = größte Projektionsfläche des Heckfahnenflügels

$s_1$ = senkrechte Strecke zwischen Windkraftangriffspunkt (Druckpunkt) des Heckfahnenflügels und der verlängerten Verbindungswelle (kurz: Hebelarm)

$v_3$ = Windgeschwindigkeit hinter dem Windrad.
Im Bereich der Fahne ist $v_3$ etwa 1/3 v

M5

M5 ist das Drehmoment aus Rotorschubkraft und dem Hebelarm z1, der bereits oben erwähnt wurde.

Würde die Vorbereitungsstellung b einhundertprozentig eintreten, würde $M_5$ zu Beginn wie folgt vorliegen:

$$K_{sR} = c_{s1} \cdot 0,5 \cdot \rho \cdot F \cdot v^2$$

$$M_5 = K_{sR} \cdot h$$

mit:

$K_{sR}$ =                           Rotorschubkraft

$c_{s1}$ = Schubbeiwert des Windrades    $h$ = die Rotorwelle ist um die Strecke h gegenüber der Verbindungswelle an ihrem Lagerpunkt am Mast parallel verschoben, die Verbindungswelle fluchtet mit der Mastachse.

<u>M2b und M6</u>

Das Drehmoment M2 ist das typische, auch im Stand der Technik bereits ausgenutzte Drehmoment der Heckfahne um die z-Achse, das den Gondelaufbau der Windrichtung nachführt.

M2b ist das Drehmoment der Heckfahne, wenn sie in Sturmstellung befindlich ist, und M6 ist das Drehmoment, das durch den Wind mittels einer seitlich wirkenden Schubkraft auf Generatorgehäuse und Rotor, mit dem entsprechenden Hebelarm, wirkt.

In Sturmstellung c halten sich die beiden Momente die Waage.

$$K_{sG} = c_{s2} \cdot 0,5 \cdot \rho \cdot F_{G+R} \cdot v^2$$

$$M_6 = K_{sG} \cdot s_2$$

mit: $K_{sG}$ =     seitliche Schubkraft auf Generatorgehäuse und Rotor

$c_{s2}$ =     entsprechender Schubbeiwert

$F_{G+R}$ =     sertliche Projektionsfläche von Generatorgehäuse und Rotor

$s_2$ =     senkrechte Strecke zw. Kraftangriffspunkt des Generatorgehäuses + Rotor und der Gondelachse

$$K_{sFb} = c_{s3} \cdot 0,5 \cdot \rho \cdot F_{Fb} \cdot v^2$$

$$M_{2b} = K_{sFb} \cdot s_3$$

mit: $K_{sFb}$ =                 Schubkraft auf Heckfahne in Sturmstellung

$c_{s3}$ =                 entsprechender Schubbeiwert

$F_{Fb}$ = Projektionsfläche der Heckfahne in    Sturmstellung

$s_3$ = entsprechender Hebelarm zur Gondelachse

M4

Das Drehmoment M4 ist das Produkt aus Gewichtskraft aller um die Verbindungswelle drehbaren Teile und S4, dem entsprechenden Hebelarm, der jeweils vom Drehwinkel abhängig ist.

$$K_G = m \cdot g$$

$$M_4 = K_G \cdot s_4$$

mit $K_G$ =                                    Gewichtskraft aller um die Verbindungswelle schwenkbaren Teile
$m$ = Masse aller um die Verbindungswelle    schwenkbaren Teile
$g$ =                                        Erdbeschleunigung
$s_4$ =                                        entsprechender Hebelarm

Da der Schwerpunkt von Generator und Rotor deutlich über der Drehachse der Verbindungswelle angeordnet ist, ist das dem unteren Ende der Heckfahne zugeordnete Ausgleichsgewicht mit einem derartigen Drehmoment (Gewicht x Hebelarm) versehen, dass der resultierende Schwerpunkt aller um die Verbindungswelle drehbaren Teile etwas schräg unterhalb der Verbindungswelle liegt, wie er mit Punkt 80 in Figur 7 eingezeichnet ist. Dies bewirkt ein relativ kleines, konstantes Drehmoment 4, das in der Zeichnung im Uhrzeigersinn wirkt. Dieses Moment 4 wirkt gegen den Betriebsstellungsanschlag bei 0°. In einer vorteilhaften Ausführung der erfindungsgemäßen Windkraftanlage ist das Drehmoment der Heckfahne 3 so ausgelegt, dass es bis vor Erreichen von etwa 4 m/s Windgeschwindigkeit kleiner ist als das oben genannte Moment 4. Wenn die Windkraftanlage normal im Wind steht und unter Betrieb ist, dann sorgt das Betriebsmoment 1 dafür, dass die Anlage bis etwa 25 m/s Windgeschwindigkeit in dieser Betriebsstellung bleibt. Mit anderen Worten, das Betriebsdrehmoment M1 des Rotors um die x-Achse sorgt in der Betriebsstellung, vgl. Figur 1 und 2, dafür, dass das in die entgegen gesetzte Richtung wirkende Drehmoment M3 der Heckfahne keine Schwenkbewegung um 90° um die Verbindungswelle 16 herum auslösen kann.
Das Drehmoment M3, das aufgrund der Windkräfte an den Heckfahnenflügeln entsteht, sollte so ausgelegt sein, dass es in bevorzugter Weise bis etwa 25 m/s Windgeschwindigkeit kleiner ist als das Betriebsdrehmoment M1. In bevorzugter Weise ist die Windkraftanlage so konzipiert, dass sie ab einer Windgeschwindigkeit von etwa 14 m/s im sogenannten Stallbetrieb läuft, so dass das Betriebsdrehmoment M1 auch bei zunehmender Windgeschwindigkeit quasi konstant bleibt, während das Moment M3, das durch die Windkräfte an der Heckfahne erzeugt wird, bei zunehmender Windgeschwindigkeit weiter zunimmt.
Der Gondelaufbau gemäß dem bevorzugten Ausführungsbeispiel erreicht die in den Figuren 3 und 4 gezeigte Vorbereitungsstellung tendenzweise durch eine Drehbewegung um die Verbindungswelle 16 unter zwei Umständen, zum einen, wenn die Windgeschwindigkeiten größer oder gleich etwa 25 m/s liegen, und zum zweiten wenn das Betriebsdrehmoment M1 wegfällt, wie es etwa der Fall ist, wenn die elektrische Last, also durch einen Blitzschlag oder einen Fehler in der elektrischen Zuleitung, dazu führt, dass der Asynchrongenerator stromlos wird oder, wenn der Generator durch Überlast außer Tritt fällt. In einem solchen Fall verschwindet das Betriebsdrehmoment M1 dann, wenn der Generator über einen Frequenzumrichter betrieben wird, und er sich sein Drehfeld selbst erzeugen muss. Dann geht die Spannung, wenn der Generator außer Tritt fällt, bis auf die Anfangsspannung zurück und das Betriebsdrehmoment M1 verschwindet.
In vorteilhafter Weise kann aber andererseits auch durch simples Trennen der elektrischen Verbindung im Generatorkreis die Windkraftanlage auch zu Wartungszwecken in die Sturmstellung gebracht werden. Hier würde man praktisch einen Lastwegfall bewusst herbeiführen.

Halten und Wiederauffinden der Betriebsstellung:

Das oben erwähnte kleine, praktisch konstante und durch entsprechende Gewichtsverteilung erzeugte Drehmoment M4 um die x-Achse sorgt dafür, dass der Rotor bei Windgeschwindigkeiten bis ca. 4 m/s in der Betriebsstellung gehalten werden kann. Beim Übergang von der Betriebsstellung in die Vorbereitungsstellung ist die Rotorwelle nicht mehr in der Flucht mit der Mastachse. Außerdem bietet die Heckfahne nur eine relativ geringe Angriffsfläche. Dann erzeugt der Rotorschub ein Drehmoment M5 um die Mastachse, so dass sich die Anlage in die Sturmstellung, siehe Figuren 5 und 6, bewegt. Dabei geschieht der Übergang von der Betriebsstellung in die Sturmstellung nur unter tendenzweiser Einnahme der Vorbereitungsstellung. Die Vorbereitungsstellung der Figuren 3 und 4 ist insbesondere deswegen dargestellt, um die prinzipielle Wirkungsweise der vorliegenden Erfindung klar darzustellen.

Sobald die Sturmstellung erreicht ist, ist das Restdrehmoment der Heckfahne M2b genauso groß wie das entgegen gesetzte Drehmoment M6, das aus den Windangriffsflächen des Generatorgehäuses und des seitlich angeströmten Rotors entsteht. In vorteilhafter Weise ist das quasi konstante Drehmoment M4 so ausgelegt, dass es dafür sorgt, dass die Windkraftanlage die Tendenz hat, sich soweit in die Windrichtung hineinzudrehen, dass die Startdrehzahl des Rotors beibehalten wird und insoweit ein gewisses, geringes Betriebsdrehmoment M1 erzeugt wird. Diese Auslegung führt dazu, dass sich bei wieder abnehmender Windgeschwindigkeit die Windkraftanlage wieder selbsttätig in den Wind dreht.

Erfindungsgemäß ist eine Windkraftanlage mit solchen Bauteilen gebaut, die die oben genannten Drehmomente erzeugen. Dabei ist für den Fachmann klar, dass sämtliche Drehmomente, die durch Auftreffen des Windes auf eine Fläche erzeugt werden, durch die Dimensionierung eben dieser Fläche eingestellt werden können. Ist dies erfolgt und sind sämtliche Bauteile sollgemäß dimensioniert und mit entsprechenden Hebelarmen, insbesondere entsprechenden Versatzstrecken $z1$ und $z2$ der Verbindungswelle 16, ausgerüstet, dann dreht sich die erfindungsgemäße Windkraftanlage sowohl bei Sturm als auch bei Wegfall der elektrischen Last in die in den Figuren 5 und 6 gezeigte Stellung hinein. Diese Sturmstellung stellt eine stabile Gleichgewichtslage dar, weil die Angriffsfläche, die weiter vorne in Windrichtung gesehen liegt, immer die größere Schubkraft erfährt, zum anderen weil konstruktiv dafür gesorgt ist, dass beide Angriffsflächen etwas hinter der Gondelachse liegen, so dass die jeweils weiter vorne liegende Fläche größer wird und entsprechend mehr Schubkraft erzeugt.

Der Fachmann erkennt, dass die Vorbereitungsstellung wahrscheinlich niemals zu 100% eingenommen werden wird. Aber allein die tendenzweise Einnahme der Vorbereitungsstellung bewirkt den erfindungsgemäßen Erfolg, dass die Windkraftanlage sich auch dann aus dem Wind herausdreht, wenn das Betriebsdrehmoment aufgrund Wegfallens der elektrischen Last wegfällt und ein betriebsgemäßer Wind vorherrscht.

Verhalten bei Auftreten von Sturm, ohne Lastwegfall:

Angenommen, der Stallbetrieb tritt ein bei 14 m/s Windgeschwindigkeit. Dann nehmen die Drehzahl und das Betriebsdrehmoment nicht mehr wesentlich zu. Wenn nun die Windgeschwindigkeit weiter steigt, entnimmt der Rotor dem Wind nicht mehr wesentlich mehr Energie, mit der Folge, dass der Heckfahnenrotor mehr Drehmoment erzeugt als vorher. Wenn der Heckfahnerotor einen Anstellwinkel besitzt, der dann bei etwa 25 m/s Windgeschwindigkeit ein Drehmoment erzeugt, dass die Größe des Betriebsdrehmoments übersteigt, dann leitet die Heckfahne wieder die Schwenkbewegung ein, wie es oben bereits beschrieben wurde. Dann kippt der Generatoraufbau wieder seitlich weg, und die Drehung um die z-Achse wird eingeleitet, wie gewünscht, um die side-facing Sturmstellung einzunehmen. In dieser Sturmstellung beherrschen die Windangriffskräfte auf die angeströmten Bauteile das Verhalten der Gondelbewegung.

Flaut der Wind dann ab unterhalb die 25 m/s Marke oder niedriger, so ist die Tendenz entscheidend, mit der sich der Generator versucht, wieder selbst nach oben "aufzustellen" aufgrund des quasi konstanten Betriebsdrehmoments. Dann findet die umgekehrte Bewegung statt, an deren Ende wieder die normale Betriebsstellung steht. In vorteilhafter Weise ist das oben erwähnte Luvgebilde und das Leegebilde so geformt, dass ein Hystereschleife durchlaufen wird, bei der side facing bei mehr als 25 m/s und ein Zurückdrehen aus side facing in die Betriebsstellung bei etwa 15 - 20 m/s realisiert wird. Die Eigenschaften der Hysterese werden beeinflusst, indem bevorzugt das konstante Drehmoment M4 und das Maß $z2$ dimensioniert werden.

Der Hystereseeffekt tritt durch die deutliche Änderung der aerodynamischen Verhältnisse beim Übergang von der Betriebsstellung in die Sturmstellung bei 25 m/s Windgeschwindigkeit auf. Das heißt, die Sturmstellung bei 25 m/s Windgeschwindigkeit und mehr hält sich selbst auch bei wieder etwas abflauendem Wind, wenn sie erst mal eingetreten ist.

Gemäß einer Variation der erfindungsgemäßen Heckfahne sind die Heckfahnenflügel mit einem aerodynamisch besonders wirksamen Profil ausgestattet, wodurch es möglich ist, die Heckfahnenfläche innerhalb eines gewissen Bereichs zu reduzieren und gleichzeitig dem Gondelaufbau der Windkraftanlage eine vorteilhafte ästhetische Gestalt zu geben.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Der Fachmann erkennt weiter, dass spezielle Gehäuseformen oder spezielle Sturmfähnchen eingesetzt werden können, die das Regelverhalten in dem einen oder anderen Merkmal beeinflussen.

Es besteht die Möglichkeit, nur den Generator- und Rotorteil um die x-Achse drehbar zu lagern und das Betriebsmoment über Umlenkmechanismen auf die Drehbewegung der klassischen Heckfahne bei der Side-Facing Sturmsicherung wirken zu lassen.

Ebenso kann das Side-Facing Sturmsicherungssystem der US Firma Southwest Windpower Arizona Flagstaff 86001 (www. eco-web.com), das beispielsweise im Modell "Whisper H40" eingesetzt wird, modifiziert werden. Dieses US System zeichnet sich dadurch aus, dass sich der Rotor nicht um die Gondelachse zur Seite dreht, sondern um eine zusätzliche, nicht ganz senkrechte Achse. Dies hat den Vorteil, dass die Heckfahne das herausdrehende Moment nicht kompensieren muss und entsprechend klein und optisch ansprechend gebaut werden kann. Eine Überdrehzahlsicherung beinhaltet dieses System allerdings nicht.

Eine weitere Variante, die in Figur 9 und 10 dargestellt ist, besteht darin, nur einen einzigen Heckfahnenflügel mit festem Anstellwinkel zur x-z-Ebene zur verwenden. Dieser erzeugt dann jedoch ein unsymmetrisch zur Windrichtung orientiertes Drehmoment um die z-Achse, das kompensiert werden sollte. Dies kann beispielsweise dadurch geschehen, dass der generatorseitige Teil der Verbindungswelle oder die Generatorwelle selbst von vornherein um ein gewisses Versatzstück s in y-Richtung in der Draufsicht der Betriebsstellung (Figur 10) versetzt ist. In bevorzugter Weise sitzt der Einzelflügel dann "oben" - wie der Generator, siehe Figur 2 als Seitenansicht, und ein Ausgleichgewicht "unten", also unterhalb des Schwenklagers 21, damit ein entsprechendes Ausgleichsdrehmoment erzeugt wird, das dafür sorgt, dass die Sturmstellung stabil ist, weil sich der Einzelflügel der Heckfahne in der Sturmstellung in Lee vom Gondellager (z-Achse) befindet.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

**Patentansprüche**

1.  Windkraftanlage mit einer einen Rotor (10) und eine Heckfahne (18) tragenden Gondel, wobei die Gondel drehbar um die vertikale Mastrichtung (z-Achse) an einem Mast (22) gelagert ist, wobei die Heckfahne der Nachführung des Rotors bei wechselnden Windrichtungen dient, wobei eine Überdrehzahlschutzvorrichtung bei Sturm vorgesehen ist, die ausgehend von einer Betriebsstellung mit Rotorachse parallel zur Windrichtung den Rotor um die z-Achse drehend aus dem Wind in eine Sturmstellung mit Rotorachse im wesentlichen senkrecht zur Windrichtung dreht, **gekennzeichnet dadurch, dass**

    a) eine Verbindungswelle (16) in einer Lagerbuchse (21) schwenkbar in einem vorgegebenem Winkelbereich zwischen zwei durch Anschläge definierten Endstellungen gelagert ist,

    b) wobei die Verbindungswelle (16) einen Generatoraufbau (14) mit Rotorwelle, Generatorbefestigung und Generatorgehäuse und die Heckfahne (18) jeweils starr befestigt tragend verbindet,

    c) wobei die Heckfahne (18) so geformt ist, dass sie, wenn sie vom Wind in der Betriebsstellung angeströmt wird, ein Gegendrehmoment um die Achse der Verbindungswelle (16) erzeugt, das entgegengesetzt zu dem Betriebsdrehmoment des Rotors (10) gerichtet ist, und eine Schwenkbewegung der Verbindungswelle (16) einleiten kann,

    d) wobei der Generatoraufbau einschließlich Rotor (10) in der verschwenkten Stellung eine Form besitzt, die ein mittels Windkräften erzeugtes Drehmoment bewirkt, das den Rotor in die Sturmstellung bringt.

2.  Windkraftanlage nach Anspruch 1, wobei die Heckfahne zwei starr mit der Verbindungswelle (16) verbundene Teile (24, 26) enthält, die in einem starr vorgegeben Anstellwinkel relativ zu einer von Mast (22) und Verbindungswelle (16) aufgespannten Ebene angeordnet sind.

3.  Windkraftanlage nach dem vorstehenden Anspruch, wobei der Anstellwinkel des einen Teils positiv, und der des anderen negativ ist, und der Betrag des Anstellwinkels in einem Bereich zwischen 10 und 40 Grad, bevorzugt zwischen 20 und 35 Grad, liegt.

4.  Windkraftanlage nach dem vorstehenden Anspruch 2, wobei der Teil (26) der Heckfahne, der in radialer Richtung der Verbindungswelle (16) gesehen auf der dem Generatoraufbau entgegen gesetzten Seite angeordnet ist, ein Gewicht besitzt, das so dimensioniert ist, dass es ein Gegendrehmoment zum Drehmoment des Generatoraufbaus samt Rotor erzeugt.

5.  Windkraftanlage nach Anspruch 1, wobei in der Betriebsstellung die Rotorwelle um einen Versatz z1 bezüglich der Achse des Schwenklagers (21) versetzt ist.

6.  Windkraftanlage nach Anspruch 1, wobei in der Betriebsstellung der heckfahnenseitige Teil der Verbindungswelle (16) einen Bereich mit einem Versatz z2 bezüglich der Achse des Schwenklagers (21) aufweist.

**7.** Windkraftanlage nach Anspruch 1, wobei

a) die Rotorwelle in der Betriebsstellung fluchtend mit dem Mast angeordnet ist,
d) die Rotorwelle in einer Vorbereitungsstellung zwischen der Betriebsstellung und der Sturmstellung nicht fluchtend mit dem Mast angeordnet ist.

**8.** Windkraftanlage nach Anspruch 1, wobei die Gewichtsverteilung von Generatoraufbau, Rotor (10) und Heckfahne (18) derart eingerichtet ist, dass sie ein Drehmoment erzeugt, das den Rotor bis zum Erreichen von etwa 3 m/s Windgeschwindigkeit in der Betriebsstellung hält.

Fig. 1

Fig. 2

10

14    16    18

12

z1                                    z2

24

y

26

16    21                              28

x

**Fig. 3**

10        14  16  21        18

12

z

20

22

x

**Fig. 4**

Fig. 5

Fig. 6

Fig. 7

Fig. 8

24

28

Z

X

Fig. 9

s

y

X

Fig. 10

**Europäisches Patentamt**

**EUROPÄISCHER RECHERCHENBERICHT**

Nummer der Anmeldung

EP 06 02 0302

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | GB 2 107 794 A (JACOBS MARCELLUS LUTHER; JACOBS PAUL ROGER) 5. Mai 1983 (1983-05-05) * das ganze Dokument * ----- | 1-8 | INV. F03D1/00 F03D7/02 F03D7/00 F03D7/04 |
| A | US 2 207 964 A (ALBERS JOHN R) 16. Juli 1940 (1940-07-16) * das ganze Dokument * ----- | 1-8 | |
| A | US 1 930 390 A (JACOBS JOSEPH H) 10. Oktober 1933 (1933-10-10) * Abbildungen 1,2 * ----- | 1-8 | |
| A | DE 196 44 917 A1 (HOERL KURT [DE]) 30. April 1998 (1998-04-30) * das ganze Dokument * ----- | 1-8 | |
| A | EP 0 709 571 A2 (AUTOFLUG ENERGIETECH GMBH [DE]) 1. Mai 1996 (1996-05-01) * das ganze Dokument * ----- | 1-8 | |

RECHERCHIERTE SACHGEBIETE (IPC)

F03D

Der vorliegende Recherchenbericht wurde für alle Patentansprüche erstellt

| Recherchenort | Abschlußdatum der Recherche | Prüfer |
|---|---|---|
| München | 13. März 2007 | Avramidis, Pavlos |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 02 0302

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2007

| Im Recherchenbericht angeführtes Patentdokument | | Datum der Veröffentlichung | Mitglied(er) der Patentfamilie | Datum der Veröffentlichung |
|---|---|---|---|---|
| GB 2107794 | A | 05-05-1983 | KEINE | |
| US 2207964 | A | 16-07-1940 | KEINE | |
| US 1930390 | A | 10-10-1933 | KEINE | |
| DE 19644917 | A1 | 30-04-1998 | KEINE | |
| EP 0709571 | A2 | 01-05-1996 | KEINE | |

EPO FORM P0461

Für nähere Einzelheiten zu diesem Anhang : siehe Amtsblatt des Europäischen Patentamts, Nr.12/82